# EUROPÄISCHE PATENTSCHRIFT

(11) **EP 2 904 357 B1**
(45) Veröffentlichungstag und Bekanntmachung des Hinweises auf die Patenterteilung: **14.06.2023**
(21) Anmeldenummer: 13777228.1
(22) Anmeldetag: 27.09.2013
(51) Int. Cl.: G01F 1/66, G01N 29/24

(54) **VORRICHTUNG UMFASSEND EINEN AKUSTISCHEN DURCHFLUSSMESSER, UND VERFAHREN ZUR BESTIMMUNG DES FLUSSES IN EINEM OBJEKT**
APPARATUS COMPRISING AN ACOUSTIC FLOWMETER, AND METHOD FOR DETERMINING THE FLOW IN AN OBJECT
APPAREIL COMPRENANT UN DÉBITMÈTRE ACOUSTIQUE, ET PROCÉDÉ DE DÉTERMINATION DU FLUX DANS UN OBJET

(30) Priorität: 01.10.2012 DE 102012019217
(43) Veröffentlichungstag der Anmeldung: 12.08.2015
(73) Patentinhaber: Rosen Swiss AG, 6370 Stans (CH)
(72) Erfinder: TWERDOWSKI, Evgeny, 49808 Lingen (DE); CARSTEN, Heinks, 49828 Neuenhaus (DE)
(74) Vertreter: Weeg, Thomas
(86) Internationale Anmeldenummer: PCT/EP2013/002902
(87) Internationale Veröffentlichungsnummer: WO 2014/053227

(56) Entgegenhaltungen:
- WO-A1-00/03207
- DE-A1- 3 446 336
- DE-A1- 10 254 053
- DE-A1- 19 722 274
- DE-B3-102004 063 482
- GB-A- 2 142 431
- JP-A- S62 100 615
- US-A- 4 408 493

## Beschreibung

Die vorliegende Erfindung betrifft ein Verfahren zur Bestimmung des Flusses oder der Durchflussrate eines Mediums in einem von dem Medium durchströmten, elektrisch leitenden Objekt, insbesondere in Rohren oder Pipelines. Darüber hinaus betrifft die Erfindung eine Vorrichtung umfassend einen akustischen Durchflussmesser zur Durchführung eines solchen Verfahrens.

Herkömmliche nicht-invasive Durchflussmesser müssen fest auf Rohre oder Pipelines geklemmt werden, damit der von einem Sendewandler erzeugte Ultraschall in das Rohr einkoppeln kann. Sowohl das Festklemmen des Gerätes wie auch der nachfolgende Betrieb beeinträchtigten nicht den Medientransport im Rohr, weswegen von einer nicht invasiven Flussmessung gesprochen wird. Oftmals werden zusätzlich keilförmige Akustikkoppler verwendet, die zwischen Piezoelement und Objekt angeordnet werden und die das von einem Sendewandler ausgegebene akustische Signal oftmals unter zusätzlicher Verwendung eines Kopplungsmediums in die Leitungswand einkoppeln.

Die Installation und Inbetriebnahme der Sende- und Empfangswandler am Rohr stellt einen kritischen Arbeitsschritt dar, da ein in Abhängigkeit des Mediums, der Wandstärke und des Materials definierter Abstand zwischen Sende- und Empfangswandler für die im Rohr erzeugten Ultraschallwellen exakt eingehalten werden muss.

Bereits bei geringfügigen Abweichungen von dem optimalen Abstand verschlechtert sich das Signal deutlich. Darüber hinaus sind die herkömmlichen Ultraschalldurchflussmesser nur in einem vergleichsweise schmalen Temperaturbereich einsetzbar, wobei hierbei die Temperatur des Objekts, vorzugsweise eines Rohres oder einer Pipeline gemeint ist. Die Betriebstemperatur der Wandler muss deutlich unterhalb ihrer Curie-Temperatur liegen, die für eine Vielzahl verwendeter Wandler typischerweise zwischen 150° und 350° liegt. Eine Lösung zur Überwindung dieses Problems ist beispielsweise in der DE 4124692 A1 beschrieben, in der der Wandler mit einer speziellen Piezo-Keramik für Hochtemperaturanwendungen ausgebildet ist. Hiermit lassen sich Fließgeschwindigkeiten oder Flussraten von Medien in Objekten mit Temperaturen bis 180° messen. Zusätzlich zu der Temperaturproblematik können jedoch mitunter kritische Probleme aufgrund von Spannungen im Material des Akustikkopplers, die durch starke Temperaturgradienten erzeugt werden, entstehen. Weiterhin ist eine Alterung des zwischen Akustikkoppler und Rohr eingesetzten, meist gelartigen Kopplungsmediums problematisch. Mit zunehmendem Alter des Kopplungsmediums verringert sich die Signalqualität der im Objekt erzeugten Ultraschallwelle.

In der JP 62100615 A ist ein Verfahren zur Messung der Durchflussrate bzw. des Flusses in einem Medium innerhalb eines elektrisch leitenden Objektes beschrieben. Die dort gezeigten Transducer sind zur Ausbildung von Lamb-Wellen geeignet.

Die DE 34 46 336 A1 betrifft einen elektrodynamischen Wandler zur Erzeugung von Ultraschallwellen, bei dem durch ein Spulensetup ungewünschte Interferenzen zwischen den von den jeweiligen Spulen erzeugen Ultraschallwellen vermieden werden.

Die DE 197 22 274 A1 betrifft ein Verfahren und eine Vorrichtung zur Bestimmung eines Volumen- oder Massenstroms, bei dem anhand der Messergebnisse auch Informationen über die Änderung von System- oder Prozessgrößen gewonnen werden. Hierbei wird eine Signatur verwendet, durch die das jeweilige Messsignal beschrieben werden soll.

Aufgabe der vorliegenden Erfindung ist es, einen akustischen Durchflussmesser nach dem Stand der Technik für einen größeren Einsatzbereich auszubilden. Weiterhin ist es Aufgabe der vorliegenden Erfindung ein verbessertes Verfahren zur akustischen Durchflussmessung auszubilden.

Die Aufgabe wird gelöst durch ein Verfahren gemäß Anspruch 1 und eine Vorrichtung gemäß Anspruch 11.

Vorteilhafte Weiterbildungen der Erfindung sind den hierauf rückbezogenen Unteransprüchen sowie der nachfolgenden Beschreibung zu entnehmen.

Bei dem erfindungsgemäßen Verfahren zur Bestimmung des Flusses oder der Durchflussrate in von einem Medium durchströmten, elektrisch leitenden Objekten, insbesondere von Rohren oder Pipelines wird mit einem Sendewandler wenigstens eine Ultraschallwelle in einem Objekt erzeugt. Diese Ultraschallwelle koppelt an einer Innenseite des Objekts als Longitudinalwelle in das Medium ein und ergibt räumlich beabstandet von der Einkoppelstelle ein Ultraschallsignal, welches sich zumindest teilweise durch die Longitudinalwelle ergibt, von einem Empfangswandler aufgenommen und zur Auswertung des Flusses oder der Durchflussrate verwendet wird, wobei der Sendewandler unter Verzicht auf eine akustische Kopplung mit der Oberfläche des Objekts ein erstes Variieren des Magnetfelds in einem Oberflächen nahen Bereich des insbesondere metallischen Objekts erzeugt und durch Wechselwirkung des variierenden Magnetfeld mit einem statischen oder quasi-statischen Magnetfeld in diesem Bereich eine erste Ultraschallwelle erzeugt. Darüber hinaus wird durch den Sendewandler zusätzlich ein weiteres variierendes Magnetsfeld in dem Bereich des Objekts erzeugt und durch Wechselwirkung dieses variierenden Magnetfeld mit dem statischen oder quasi-statischen Magnetfeld in diesem Bereich eine weitere Ultraschallwelle erzeugt wird, die sich mit der ersten Ultraschallwelle dergestalt überlagert, dass eine Amplitude einer resultierenden Welle in Richtung des Empfangswandlers vergrößert und in Richtung weg von dem Empfangswandler verringert ist, wobei vorzugsweise das erste und das zweite variierende Magnetfeld durch zwei Hochfrequenzspulen des Sendewandlers erzeugt werden. Sowohl Sende- als auch Empfangswandler sind außerhalb des Objekts angeordnet und auch der Empfangswandler ist vorzugsweise nicht mit dem Objekt akustisch gekoppelt.

Unter einer akustischen Kopplung wird im Anspruch eine Verbindung zwischen dem Sende- oder Empfangswandler mit dem Objekt verstanden, die darauf optimiert ist, Schallwellen zu übertragen, d.h. beispielsweise eine Wasser, Fette, Kleber etc. aufweisende Verbindung. Eine lediglich physikalische Verbindung, die nur einen sehr geringen Anteil einer Schallwelle (< 10 % der Amplitude) überträgt, ist hierunter nicht zu verstehen.

Durch die Verwendung dieses Ansatzes wird ein deutlich verbessertes Ultraschallsignal sowohl im Objekt als auch im Medium erzeugt, da störende Reflexionen aus einem Teil des Objekts, welcher vom Empfangswandler aus betrachtet hinter dem Sendewandler liegt, und welche zu ungewünschten Anteilen im Empfangssignal führen, minimiert oder sogar komplett unterbunden werden. Zusätzlich zu der Verringerung der störenden Ultraschallanteile aufgrund von Rohrreflexionen ist das Ultraschallsignal verstärkt, was auf Seiten des Empfangswandlers zu einer besseren Aufnahme des Signals und auch zu einer höheren Empfindlichkeit und Qualität der Messung führt.

Darüber hinaus ist es aufgrund des verbesserten Ultraschallsignals möglich, dieses mehrfach im Medium reflektieren zu lassen und hierdurch auf Seiten des Empfangswandlers entsprechende Mehrfachsignale zu erhalten, die ebenfalls zu einer Verbesserung der Auswertung beitragen, da das Ultraschallsignal mit jeder weiteren Reflexion an der Innenseite des Objekts zusätzlich durch die Mediengeschwindigkeit beeinflusst wird und somit eine zusätzliche auswertbare Variation erfährt.

Vorzugsweise sind die erste und die zweite Ultraschallwelle in Richtung weg von dem Empfangswandler dergestalt aufeinander abgestimmt, dass sie sich aufheben und somit keine störenden Reflexionen erzeugt werden. Insbesondere wird die zweite Ultraschallwelle um 90° phasenverschoben und um λ/4 räumlich verschoben zur ersten Welle in das Medium eingekoppelt. λ ist die Wellenlänge der im Objekt erzeugten Ultraschallwelle.

Ein erfindungsgemäßes Verfahren ist besonders vorteilhaft, wenn die variierenden Magnetfelder durch eine oder mehrere Leiterbahnen der Hochfrequenzinduktionsspulen erzeugt werden, wobei sich die Leiterbahn(en) im Wesentlichen über wenigstens 90° entlang des Umfangs des rohr- oder kanalförmigen Objekts und angewinkelt zu dessen Längsachse erstrecken. Bei einem rohrförmigen Objekt handelt es sich vorzugsweise um ein im Querschnitt kreisförmiges Objekt. Es kann sich allerdings auch um andere Querschnittsformen, insbesondere eckige Kanäle, handeln.

Durch die Erstreckung der einen oder mehreren Leiterbahnen über wenigstens 90° entlang des Umfangs des Objekts wird ein Bereich von rund der Hälfte des freien Querschnitts des Rohres durchschallt. Eine noch bessere Messung des Mediumflusses wird bei einer höheren Abdeckung des freien Rohrleitungsquerschnitts erzeugt, die eine oder mehreren Leiterbahnen um 180°, noch bevorzugter um zumindest 350°, um den Umfangs des Rohres herum angeordnet sind. Eine vollständige Umwicklung des Rohres mit Leiterbahnen (d.h. um rund 360°) führt zu der Erzeugung von über den kompletten Umfang der Innenseite des Objekts in das Medium einkuppelnden Schallwellen. Diese decken den freien Innenquerschnitt des Objekts, insbesondere des Rohres ab. Darüber hinaus werden in Umfangsrichtung keine störenden Schallwellen an bzw. aufgrund etwaiger Kanten des Sendewandlers, wie sie bei herkömmlichen Sendewandlern, die in Umfangsrichtung begrenzt auf das Objekt aufgesetzt werden und das Signal-to-Noise Ratio verschlechtern, vorkommen, erzeugt.

Zur Vermeidung von Kantendiffraktionen kann es vorteilhaft sein, wenn sich die entgegengesetzten Enden bzw. Umlenkungsbereiche der Leiterbahnen teilweise überlappen, d.h. in Umfangsrichtung quer zur Längserstreckung des zu untersuchenden Rohres eine Überlappung vorliegt, die kleiner ist als die verwendete Wellenlänge, d.h. die kleiner als zwischen 3 mm und 36 mm liegen kann. Alternativ können die Leiterbahnen oder ein die Leiterbahnen aufweisendes Flachband an den entgegengesetzten, jedoch aneinander anliegenden Enden von der zu untersuchenden Rohrwand abgehoben sein und sich von dieser weg biegen sowie sich dann ggf. senkrecht zur Rohrwand verlaufend aneinander anschmiegen. Der Verlauf der Leiterbahnen um das vorzugsweise kreisförmige Rohr herum ist dann in etwa kreisförmig mit einer kleinen Spitze auf einer Seite.

Hierbei ist zu berücksichtigen, dass Pipeline-Rohre, die kreisrund sein sollen, geringfügige Abweichungen von einem idealen, kreisförmigen Querschnitt haben können.

Auch für solche geringfügig ovalen Rohrquerschnitte ist die Erfindung bevorzugt geeignet.

Die Anordnung der Leiterbahnen mit Ausnahme der für die Ausbildung einer Spule notwendigen Umlenkungsbereiche ist angewinkelt zur Längsachse des Objekts vorzunehmen. Insbesondere kann die Anordnung exakt quer, d.h. 90° zur Längsachse des Objekts erfolgen.

In einer Querschnittsebene durch die Leiterbahnen und quer zur Längsachse des Objekts können somit auch die Leiterbahnen der Hochfrequenzinduktionsspulen des Sendewandlers gekrümmt ausgebildet sein, d.h. dem Verlauf der äußeren Oberfläche des Objekts angepasst sein.

Gemäß dem bereits vor- sowie dem weiter unten Nachbeschriebenen wird die eingangs gestellte Aufgabe auch durch eine Vorrichtung umfassend ein von einem Medium durchströmtes elektrisch leitendes Objekt, insbesondere ein Rohr oder eine Pipeline, und einen an dem elektrisch leitenden Objekt oder in dessen Nahfeld angeordneten akustischen Durchflussmesser zur nicht-invasiven Bestimmung des Flusses oder der Durchflussrate gelöst, wobei der Durchflussmesser zur Durchführung des vor- bzw. nachbeschriebenen Verfahrens ausgebildet ist. Erfindungsgemäß weist der akustische Durchflussmesser einen Sendewandler zur Erzeugung wenigstens einer Ultraschallwelle im Objekt auf, welche an einer zum Medium gerichteten Innenseite des Objekts als Longitudinalwelle in das Medium einkoppelt. Darüber hinaus weist der Durchflussmesser einen Empfangswandler zur Detektion eines Ultraschallsignals im Objekt auf, wobei sich das Ultraschallsignal zumindest teilweise durch die Longitudinalwelle ergibt und wobei der Sendewandler unter Verzicht auf eine akustische Kopplung mit der Oberfläche des Objekts zur Erzeugung zweier variierender Magnetfelder in einem oberflächennahen Bereich des insbesondere metallischen Objekts zwei Hochfrequenzspulen aufweist. Diese Hochfrequenzspulen sind quer zur Längsrichtung des Objekts zu betrachtend jeweils zueinander versetzt angeordnet und erzeugen jeweils ein variierendes Magnetfeld, welches mit einem statischen oder quasi-statischen Magnetfeld, welches durch den Durchflussmesser erzeugt wird, in dem oberflächennahen Bereich eine Ultraschallwelle erzeugt. Die beiden so erzeugten Ultraschallwellen überlagern sich zu der gewünschten gerichteten Ultraschallwelle. Eine akustische Kopplung des Durchflussmessers mit dem Objekt, beispielsweise einer Pipeline oder einem Rohr ist nicht notwendig. Sende- und Empfangswandler des akustischen Durchflussmessers können beabstandet von dem Objekt angeordnet werden, wobei wieder auf die vorbeschriebene akustische Kopplung verzichtet werden kann. Neben Messungen in Bereichen oberhalb von 180°C kann auch der Durchfluss durch beschichtete Objekte wie beispielsweise mit Zement oder Kunststoff beschichtete Pipelines gemessen werden. Hierbei ist lediglich Voraussetzung, dass die Beschichtung durchlässig für elektromagnetische Felder ist. Gleichzeitig werden durch die zwei gekoppelten Ultraschallwellen die Voraussetzungen geschaffen, dass sich die Ultraschallwelle auf der von dem Empfangswandler weggerichteten Seite des Sendewandlers im Objekt nicht weiter ausbreitet bzw. nur minimal ausbreitet und somit keine oder nur sehr geringe störende Reflexionen, die das Messsignal verschlechtern können, erzeugt werden.

Obgleich der Sendewandlers des Durchflussmessers auch in physischen Kontakt mit dem Objekt sein kann, reicht es aus, wenn er in der Nähe des Durchströmobjekts positionierbar ist. Die Entfernung zum Objekt kann bis beispielsweise 2 cm betragen. Durch Verwendung geeigneter Materialien, die entsprechend hohe Temperaturen abkönnen, können auch besonders heiße Rohre problemlos gemessen werden.

Durch die Verwendung der Hochfrequenzinduktionsspule wird in einem oberflächennahen Bereich des Objekts ein magnetisches Wechselfeld erzeugt. Ein Teil des von der oder den Hochfrequenzinduktionsspulen erzeugten ersten Hochfrequenzmagnetfelds dringt in das Objekt ein und induziert Wirbelströme bzw. führt zu Magnetostriktion. Aufgrund der Wechselwirkung dieser Wirbelströme und von Lorenzkräften bzw. der Magnetostriktion mit/in einem statischen oder einem quasi-statischen Magnetfeld wird eine erste Ultraschallwelle erzeugt. Auf dieselbe Weise wird eine weitere, zweite Ultraschallwelle im Objekt erzeugt, die sich mit der ersten Ultraschallwelle in eine Richtung abschwächend und in eine weitere Richtung hin zum Empfangswandler verstärkend überlagert.

Unter einem quasi-statischen Magnetfeld wird ein Magnetfeld verstanden, welches in den Berechnungen gegenüber dem hochfrequenten Magnetfeld des Sendewandlers als statisch angesehen werden kann. Insbesondere variiert ein quasi-statisches Magnetfeld mit einer Frequenz ≤ 200 Hz, bevorzugt ≤ 10 Hz, so dass auch elektromagnetisch erzeugte Magnetfelder als statisches Magnetfeld angesehen werden können. Insbesondere handelt es sich um ein durch Permanentmagnete erzeugtes Magnetfeld. Bei dem hochfrequenten Magnetfeld handelt es sich insbesondere um ein oszillierendes Magnetfeld. Darüber hinaus ist neben dem Vorteil, durch vorhandene Beschichtung eines Rohres hindurch und in einem weiten Temperaturbereich messen zu können, die Vorrichtung aufgrund fehlender Kopplungsmedien geringeren Alterserscheinungen unterworfen. Ein im bekannten Stand der Technik oftmals auszutauschendes Kopplungsmedium wird nicht benötigt.

Ein Durchflussmesser wird vorliegend oftmals unter Bezugnahme auf ein Objekt beschrieben, an dem oder in dessen Nahfeld er angeordnet ist. Eine Vorrichtung umfassend den Durchflussmesser und ein solches z.B. als Rohr ausgebildetes Objekt ist Gegenstand der Erfindung, wobei der Durchflussmesser für den Betrieb an einem solchen Rohr ausgebildet ist.

Für Signalanpassungszwecke ist die Frequenz, mit der ein Wandler bzw. die Induktionsspulen betrieben werden kann, vorzugsweise automatisch variierbar. Durch die Variierbarkeit oder Anpassung der Hochfrequenzen, mit denen die Spulen des Sendewandlers zu betreiben sind, kann sowohl die im Objekt erzeugte Ultraschallwelle wie auch die im Medium erzeugte Longitudinalwelle optimal auf den Empfangswandler ausgerichtet werden. Somit können Toleranzen in dem Abstand des Sendewandlers vom Empfangswandlers bzw. ungenaue Positionierungen, die im Stand der Technik umständlich manuell nachjustiert werden müssen, auf elektronische Weise ausgeglichen werden. Dies ergibt sich aus der für die Auslegung der Wandler verwendete Winkelabhängigkeit der erzeugten Transversalwellen, insbesondere der bulk shear Wellen (Volumenscherwellen) von der verwendeten Frequenz. Auch Schwankungen der Wellenausbreitung aufgrund von Druckänderungen im Rohr bzw. Temperaturänderungen können auf diese Weise ausgeglichen werden.

Die Messgenauigkeit und die Anpassbarkeit des Systems ist gegenüber dem Stand der Technik insbesondere aufgrund des deutlich verbesserten Ultraschallsignals, welches sich aus der Überlagerung zweier einzeln eingekoppelter Ultraschallwellen ergibt, deutlich verbessert. Die Hochfrequenzen, mit denen der Sendewandler betrieben werden kann, ist somit dergestalt zur Optimierung des empfangenen Signals variierbar, dass eine im Medium induzierte Longitudinalwelle optimiert in Richtung des Empfangswandlers geführt wird.

Während die beiden Hochfrequenzspulen durch eine identische Leiterbahn, die schaltungstechnisch mittels verschiedener Schalter in mehrere Spulen unterteilt werden kann, ausgebildet sein kann, ist es fertigungs- und schaltungstechnisch einfacher, die erste und die zweite Spule durch zwei unterschiedliche Leiterbahnen des Sendewandlers auszubilden. Hierbei kann jede Leiterbahn mit einer eigenen Sendeelektronik versehen sein, alternativ kann ein gemeinsamer Controller die Elektronik für beide Leiterbahnen steuern. Statt eines Sende- oder Empfangswandlers mit zwei Spulen können alternativ auch zwei Sende- bzw. Empfangswandler betrieben werden.

Der Sendewandler mit seinen beiden Leiterbahnen ist vorzugsweise auf die Erzeugung von Volumen-Wellen (Bulk Waves), insbesondere von Shear-Bulk-Wellen, oder auf die Erzeugung von geführten Wellen (guided waves), insbesondere von Lamb-Wellen n-ter Ordnung mit n ganzzahlig und > = 0, ausgelegt.

Bei der Erzeugung von Lambwellen n-ter Ordnung wird eine besonders gleichmäßige Durchschallung des Mediums erreicht. Die Verwendung nullter oder höherer Moden, insbesondere von Moden der Ordnung n = 0,1 oder 2 hat sich insbesondere für Durchflussmessungen von wässrigen, ölhaltigen und gasförmigen Medien als geeignet und für eine deutliche Ausbildung von Longitudinalwellen als passend gezeigt. Durch die Frequenzanpassung des Wandlers lassen sich gewünschte optimale Moden einstellen. Für kleinere, insbesondere rohrförmige Objekte, mit Durchmesser von vorzugsweise weniger als 5 cm können der oder die Wandler gezielt auf die Erzeugung von geführten Wellen in Form von flexural waves ausgelegt werden.

Unter der Auslegung der Wandler wird insbesondere deren einzustellende Frequenz und die Anordnung des statischen (oder quasi-statischen) Magnetfeldes und die Anordnung der Leiterbahn oder -bahnen verstanden. Die Einstellung der Hochfrequenz der Wandler zur Erzeugung von Lamb-Wellen oder Shear-Wellen erfolgt insbesondere in Abhängigkeit von der Stärke der Wand des Objekts, in der die Ultraschallwelle erzeugt werden soll.

Neben Sende- und Empfangswandler weist ein akustischer Durchflussmesser insbesondere eine Vorrichtung zur Magnetisierung des Objekts wie vorbeschrieben, eine Elektronik für die Anregung und eine Empfangselektronik inklusive einer Signalauswertung auf.

Um die Einkopplung einer Ultraschallwelle in das Objekt störungsfreier zu gestalten hat es sich als vorteilhaft erwiesen, wenn die erste oder zweite oder auch beide Ultraschallwellen durch wenigstens eine Hochfrequenzspule erzeugt werden, deren Spulenwicklung in der Mitte der Spule vervielfacht ist. Durch diese Apodisation verbessert sich die Wellenlängenreinheit, d.h. die Wellenlängen lassen sich präziser definieren. Unter Mehrfachwicklungen werden hierbei dicht aneinander liegende, jedoch umfangsseitig voneinander isolierte Leiterbahnabschnitte derselben Leiterbahn verstanden, die beide zum nächsten beabstandeten Leiterbahnabschnitt in etwa denselben Abstand haben.

Zusätzlich oder auch alternativ kann das Signal des Sendewandlers über eine Fensterfunktion moduliert werden, bei der es sich in einem einfachen Fall um eine gauß'sche Funktion handeln kann. Hierdurch lässt sich die Frequenz der erzeugten Ultraschallwelle besser definieren, so dass genauso wie bei der Apodisation die beiden von dem Sendewandler erzeugten Ultraschallwellen präsizer darstellbar sind und sich eine besser definierbare Überlagerung dieser beiden Wellen zu der gewünschten Ultraschallwelle ergibt.

Vorzugsweise sind Sende- und Empfangswandler soweit voneinander beabstandet, dass sich das Ultraschallsignal im Empfangswandler aus mehrfachen Durchgängen im Medium ergibt. Die Abstände von Sende- und Empfangswandler liegen hierbei insbesondere in einem Bereich ≤ 1,50 m.

Die Einkopplung einer Ultraschallwelle in das Objekt erfolgt teilweise noch unter einem räumlichen Versatz (in Längsrichtung des Objekts) zwischen dem Sendewandler und dem Übergang ins Medium. Dies kann zu gezielten Mehrfachdurchgängen durch das Medium führen. Ein sich hieraus ergebenes Empfangssignal kann genauere Messungen ermögliche. Das Setup der Vorrichtung ist danach auszuwählen, dass Sende- und Empfangswandler ausreichend weit voneinander beabstandet sind. Alternativ oder ergänzend kann es vorteilhaft sein, dass ein Paar Sende- und Empfangswandler einerseits und ein weiteres Sende- und Empfangswandlerpaar beabstandet vom ersten Paar am Objekt angeordnet werden und sowohl in Richtung des Flusses des Mediums sowie in die Gegenrichtung des Flusses gemessen wird. Sich insbesondere aufgrund von unbekannt langen Einkoppelstrecken ins Medium ergebene Unbekannte in der Auswertung lassen sich so eliminieren.

Vorzugsweise wird das Ultraschallsignal von zwei Hochfrequenzinduktionsspulen des Empfangswandlers aufgenommen, deren Empfangssignal zur Analyse überlagert werden. Hieraus ergibt sich ein Empfangssignal in Form eines Wellenpaketes, welches vorzugsweise mit der Sendefrequenz demoduliert werden kann.

Bei der Ausbildung des Durchflussmessers ist es von Vorteil, wenn die gleiche Stromrichtung aufweisenden Leiterbahnenteilstücke einer Hochfrequenzspule, die im Wesentlichen parallel entlang des Umfangs und quer zur Längsachse des Objekts angeordnet werden sollen, einen konstanten Abstand von λ aufweisen, wobei λ der Wellenlänge der erzeugten Ultraschallwelle im Objekt entspricht. In dieser Betrachtung werden die Umlenkungen der Teilstücke der jeweiligen Leiterbahnen, die auch in Längsrichtung laufen müssen nicht betrachtet. Bei diesen Umlenkungen ist jedoch vorteilhaft, dass diese nicht scharfkantig ausgebildet sind, um störende Einflüsse im Objekt zu vermeiden.

Um eine gute Interferenz der zwei von einem Sendewandler erzeugten Ultraschallwellen zu ermöglichen, weist der Durchflussmesser pro Hochfrequenzspule jeweils eine Leiterbahn auf, wobei die durch Umlenkung verbundenen Teilstücke der ersten Leiterbahn jeweils von einem benachbarten Teilstück der zweiten Leiterbahn einen konstanten Abstand von λ /4 aufweisen, wobei λ der Wellenlänge der erzeugten Ultraschallwelle entspricht.

Eine einfache Synchronisation der Sende- und Empfangswandler und entsprechende Vorteile der Auswertung ergeben sich dann, wenn Sende- und Empfangswandler über denselben Zeitgeber miteinander verbunden sind.

Wie bereits vorbeschrieben sind die zumindest zwei Leiterbahnen des Sende- oder Empfangswandlers gekrümmt und zum Anlegen an das Rohr und/oder Umwickeln des Rohres ausgebildet.

Hierbei sind die Leiterbahnen insbesondere dergestalt gekrümmt ausgebildet, dass sie sich im Wesentlichen über wenigstens 90° entlang des Umfangs des rohrförmigen Objekts und angewinkelt zu dessen Längsachse erstrecken. Bei dem Querschnitt kann es sich um einen runden aber auch einen eckigen Querschnitt handeln.

Weitere Vorteile und Einzelheiten der Erfindung sind der nachfolgenden Figurenbeschreibung zu entnehmen.

In den schematisch dargestellten Figuren zeigt:
- Fig. 1: eine Schnittdarstellung eines Durchflussmessers nach dem Stand der Technik,
- Fig. 2: einen Teil eines akustischen Durchflussmessers in einer Ansicht gemäß Fig. 1,
- Fig. 3: die Anwendung des akustischen Durchflussmessers bei einem beschichteten Objekt,
- Fig. 4: eine Prinzipskizze des akustischen Durchflussmessers,
- Fig. 5: eine Abbildung mit Empfangssignalen eines Setups gemäß Fig. 4,
- Fig. 6: eine Ausgestaltung der Erfindung,
- Fig. 7: eine Abbildung mit Empfangssignalen eines Setups gemäß Fig. 6,
- Fig. 8: ein Beispiel für eine Wicklung eines Sendewandlers eines erfindungsgemäßen Gegenstands,
- Fig. 9: einen erfindungsgemäßen Gegenstand in einer Prinzipdarstellung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

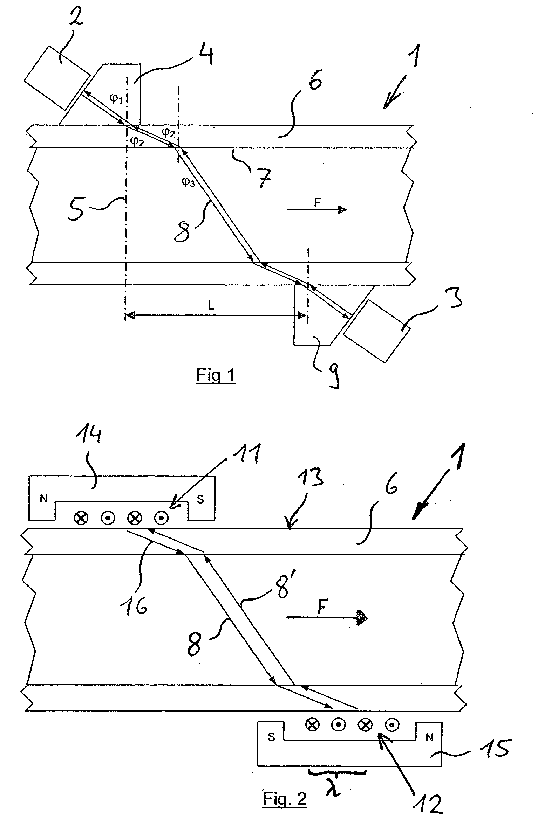

Fig. 1 zeigt ein aus dem Stand der Technik bekanntes Setup zur Messung des Flusses F eines Mediums, insbesondere eines Gases oder einer Flüssigkeit in einem geschnitten dargestellten Rohr 1. Ein piezo-elektrischer Ultraschallwandler 2 kann wie ein piezo-elektrischer Ultraschallwandler 3 sowohl als Sende- wie auch als Empfangswandler agieren. Ausgehend von beispielsweise dem Sendewandler 2 wird ein Ultraschallsignal über einen keilförmigen Akustikkoppler 4 unter einem Winkel ϕ1 (gemessen gegenüber einer Lotrechten 5 zur Rohroberfläche) in eine Rohrwand 6 eines Objekts eingekoppelt. Unter der Annahme, dass sich die Ultraschallwelle in der Rohrwand 6 strahlenförmig ausbreitet, gelangt die Welle an die Rohrinnenseite 7 und koppelt dort unter einem Winkel ϕ3 in das Medium ein. In diesem wird die als Longitudinalwelle 8 eingekoppelte Schallwelle durch den Fluss des Mediums variiert und gelangt an die in der Figur untere Innenseite der Rohrwand. Bezüglich der Umfangsrichtung der Rohrinnenwand handelt es sich um eine der Einkoppelstelle gegenüberliegende Seite der Rohrinnenwand, die aufgrund des in Richtung F weisenden Wellenvektoranteils axial versetzt ist. An dieser unteren Seite erfolgt wiederum eine Einkoppelung in die Rohrwand 6 hin zu einem weiteren Akustikkoppler 9. Durch dieses hindurch gelangt das vom Medium beeinflusste Ultraschallsignal zu dem in diesem Fall als Empfangswandler fungierenden Wandler 3. In einem weiteren Operationsmodus ist der Empfangswandler 3 dann in einem nächsten Schritt als Sendewandler tätig und emittiert eine Ultraschallwelle über das Kopplungsmittel 9 in Richtung des nun als Empfangswandlers fungierenden Wandlers 2. Ersichtlich kommt es für einen funktionierenden Aufbau bei diesem Setup auf die Beabstandung L der Übergänge des Ultraschallsignals zwischen Kopplungsmittel 4 bzw. Kopplungsmittel 9 und der Rohrwand 6 an. Geringfügige Abweichungen in dem Abstand der beiden Akustikkoppler voneinander führen zu einer Abschwächung oder einem vollständigen Verlust des Signals und so zu einem schlechteren oder gar keinem Messergebnis.

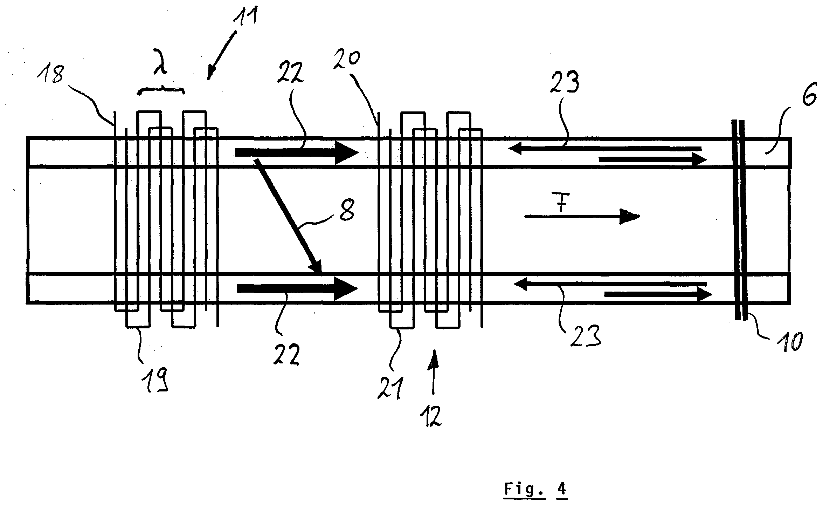

In Fig. 2 ist ein akustischer Durchflussmesser (in Teilen) gezeigt, der neben einem ersten als Sendewandler fungierenden Wandler 11 einen weiteren als Empfangswandler fungierenden Wandler 12 zeigt. Wie die Ultraschallwellen 8 und 8' sowie die durch weitere Pfeile in der Rohrwand dargestellten Ultraschallwellen implizieren, können bei diesem Ausführungsbeispiel einerseits der Sendewandler 11 zusätzlich als Empfangswandler und andererseits der Empfangswandler 12 zusätzlich als Sendewandler fungieren. Bei beiden Wandlern, die beispielsweise in Figur 4 näher beschrieben werden, sind nur exemplarisch Leiterbahnen in die Figurenebene hinein und aus dieser heraus angezeigt. Beide Wandler 11 und 12 umfassen jeweils zwei Hochfrequenzinduktionsspulen und weitere nicht gezeigte Teile wie z.B. eine Leistungselektronik zur Erzeugung der benötigten Stromstärken. Beide Hochfrequenzinduktionsspulen der Wandler können in einem der äußeren Oberfläche 13 nahen Bereich der Rohrwand 6 Wirbelströme induzieren. Diese wechselwirken mit einem im vorliegenden Ausführungsbeispiel der Fig. 2 von zwei polschuhartigen Permanentmagneten 14 und 15 in der Rohrwand 6 erzeugten, statischen Magnetfeld. Durch die Wechselwirkung entstehen in der Rohrwand 6 gerichtete Ultraschallwellen. Eine solche Ultraschallwelle 16 ist beispielsweise als Volumenscherwelle ausgebildet und koppelt in das in Richtung des Flusses F fließende Medium ein. Auf der gegenüberliegenden Seite der Rohrinnenwand koppelt die Longitudinalwelle wieder in die Rohrinnenwand und kann dort von der dann als Empfangswandler fungierenden Hochfrequenzinduktionsspule 12 detektiert werden. Die Vorrichtung kann mit verschiedenen Setups für die Wandler 11 und 12 sowie auch mit verschiedenen Setups bezüglich der Magnete 14 und 15 betrieben werden.

Wie bereits in der Fig. 2 angedeutet, ist die Verwendung eines Kopplungsmediums nicht notwendig. Hierdurch wird die Installation der Wandler in der Nähe des Rohres oder auch an dem Rohr vereinfacht. Durch die mögliche Beabstandung oder die Verwendung von wärmeisolierenden Schichten zwischen Sende- und Empfangswandler und dem Rohr 6 kann auch an sehr heißen Rohren gemessen werden.

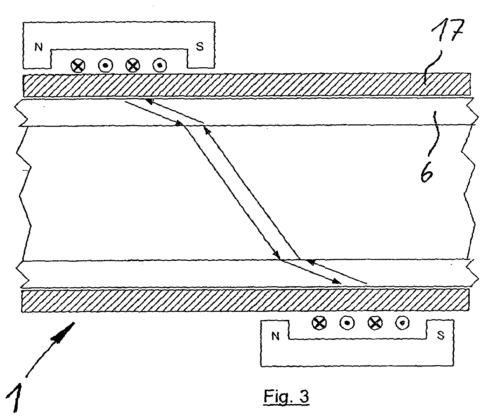

Eine schematische Darstellung eines Messaufbaus für ein mit einer Beschichtung 17 versehenes Rohr 6 ist in Fig. 3 dargestellt. Die Beschichtung muss zur Erzeugung der Ultraschallwelle im Rohr 6 nicht entfernt werden, wie dies im Stand der Technik notwendig ist. Mithin ist die Messung des Flusses durch beschichtete Rohre vereinfacht durchführbar.

Der Durchflussmesser weist gemäß Fig. 4 einen Sendewandler 11 mit zwei Hochfrequenzinduktionsspulen 18 und 19 auf, die in Längsrichtung des Flusses F, welche auch gleichzeitig der Längsrichtung des Rohres 6 entspricht, nacheinander angeordnet sind. Betrachtet in der Fig. 4 quer zur Längsrichtung des Rohres beträgt der Abstand nebeneinander befindlicher Leiterbahnabschnitte der Hochfrequenzspulen 18 und 19 λ/4, wobei λ die Wellenlänge der in der Rohrwand induzierten Schallwelle ist. Die Hochfrequenzinduktionsspulen 18 und 19 induzieren Wechselfelder in der oberflächennahen Schicht der Rohrwand, die zu der Ausbildung von Schallwellen führen, die räumlich um λ/4 versetzt und zeitlich um 90° phasenverschoben sind. Hierdurch ergibt sich entgegen der Richtung F des Mediums und von den Hochfrequenzspulen bzw. Hochfrequenzinduktionsspulen 18 und 19 weg eine negative Interferenz, d.h. eine Auslöschung der Schallwellen, während sich in Richtung F des Flusses und ausgehend von den Hochfrequenzspulen durch konstruktive Interferenz eine verstärkte Amplitude der Schallwelle in der Rohrwand ergibt. Entsprechend ist die in das Medium eingekoppelte Longitudinalwelle 8 in ihrer Amplitude verstärkt.

In der schematischen Darstellung der Fig. 4 ist die Leiterbahn bis auf Umlenkungen ausbildende kurze Abschnitte in Richtung des Flusses F im Wesentlichen quer zur Längsrichtung des Rohres ausgebildet. Die Leiterbahnen sind hierbei vollständig um das Rohr herumgewickelt, d.h., die Außenwand des Rohres ist über 360° entlang des Umfangs komplett abgedeckt. Hierdurch ergibt sich eine optimale Ausbildung der im Rohrinneren entstehenden Schallemission.

Auf Seiten des Empfangswandlers 12 sind ebenfalls zwei Hochfrequenzinduktionsspulen 20 und 21 angeordnet, die zunächst sowohl die in der Rohrwand verlaufenden Schallwellen 22 und ein Ultraschallsignal aufgrund einer wieder in die Rohrwand eingekoppelten Longitudinalwelle 8, die durch das Medium beeinflusst wurde, als auch reflektierte Ultraschallwellen, die betrachtet von dem Sendewandler 11 aus hinter dem Empfangswandler 12 verlaufen, detektieren. Beispielsweise handelt es sich bei diesen Wellen 23 um Reflexionen aufgrund von in der Rohrwand laufenden Wellen an Schweißnähten 10. Leiterbahnen gleicher Stromrichtung der Hochfrequenzinduktionsspulen weisen den Abstand λ auf (vgl. Fig. 2, 4 und 8).

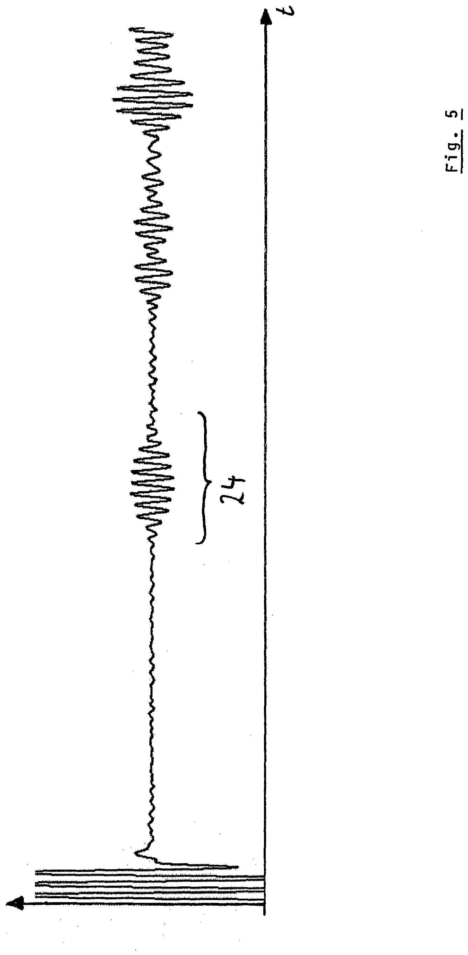

Zur Eliminierung dieser nicht gewünschten Signale 23 werden die Empfangssignale der Spulen 21 und 20 wiederum phasenverschoben addiert, so dass sich das in der Fig. 5 gezeigte Amplitudensignal ergibt. Dort ist über der Zeit T eine Signalamplitude aufgetragen. Aus dieser kann das durch die Longitudinalwelle 8 und entsprechend dem Medium beeinflusste Signal im Bereich 24 zur Auswertung der Flussrate herangezogen werden.

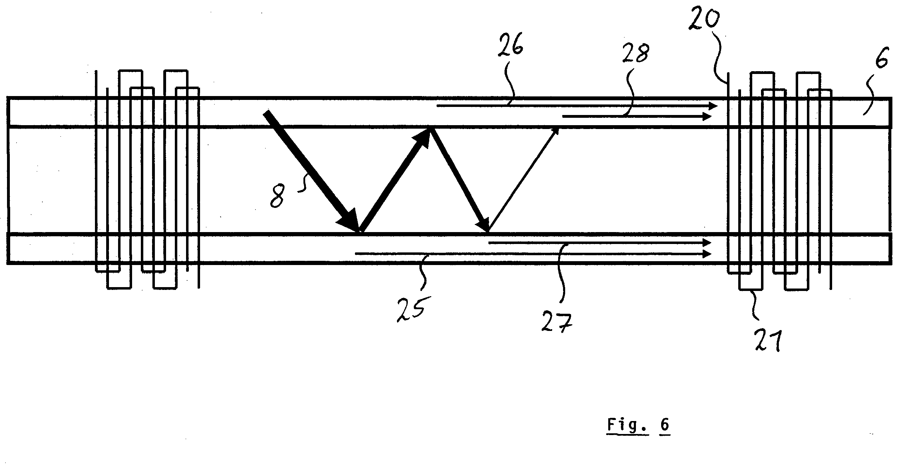

Ein erfindungsgemäßer Aufbau ist in der Fig. 6 gezeigt. Dort sind Sende- und Empfangsspulen soweit voneinander beabstandet, dass die Longitudinalwelle 8 zumindest teilweise mehrfach im Rohrinneren reflektiert werden kann und sich somit resultierende Ultraschallsignale 25,26,27 und 28 ergeben. Diese werden wiederum von den beiden Leiterbahnen 20 und 21 des Empfangswandlers 12 aufgenommen. Gerade durch die erfindungsgemäße Ausbildung des Sendewandlers und die hierdurch sich ergebende, besonders stark ausgeprägte Longitudinalwelle ist eine vernünftige und mit einer vertretbaren Signal to noise ratio versehene Auswertung möglich.

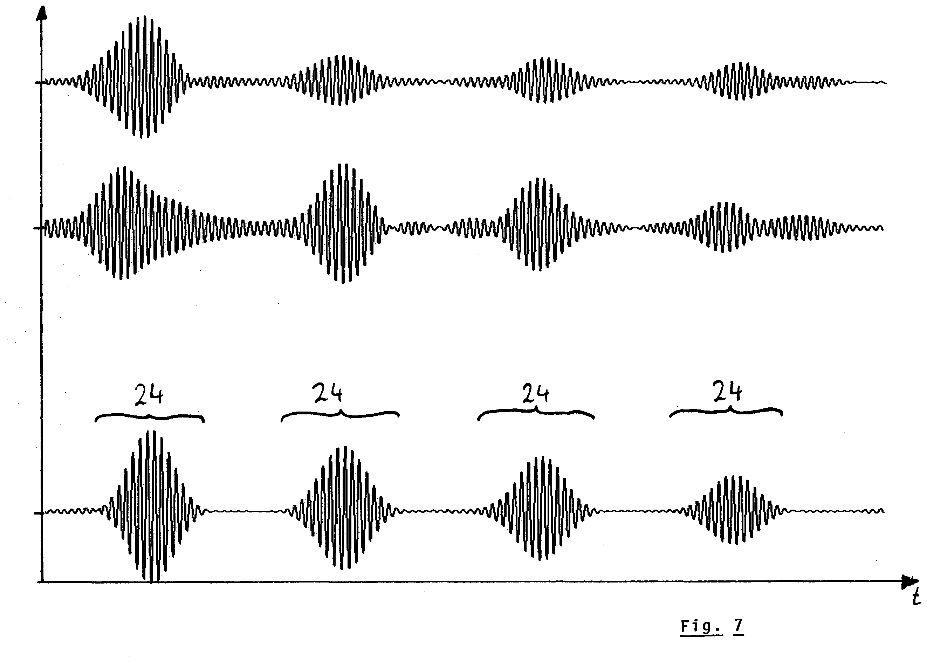

Die sich aus den in den beiden oberen Kurven der Fig. 7 ergebenden und noch durch Reflektionen störungsbehafteten Empfangssignale, die wie auch bei der Fig. 5 allerdings in anderer Form von den Leiterbahnen 20 und 21 aufgenommen werden, werden wiederum phasenverschoben addiert, so dass sich das in der Fig. 7 unten abgebildete Wellensignal ergibt. Aus den Abständen der einzelnen Signalbereiche 24 kann dann wiederum ein Einfluss einer Einkoppelstrecke zwischen Erzeugen der Wirbelstromfelder und der Einkopplung in das Medium herausgerechnet werden.

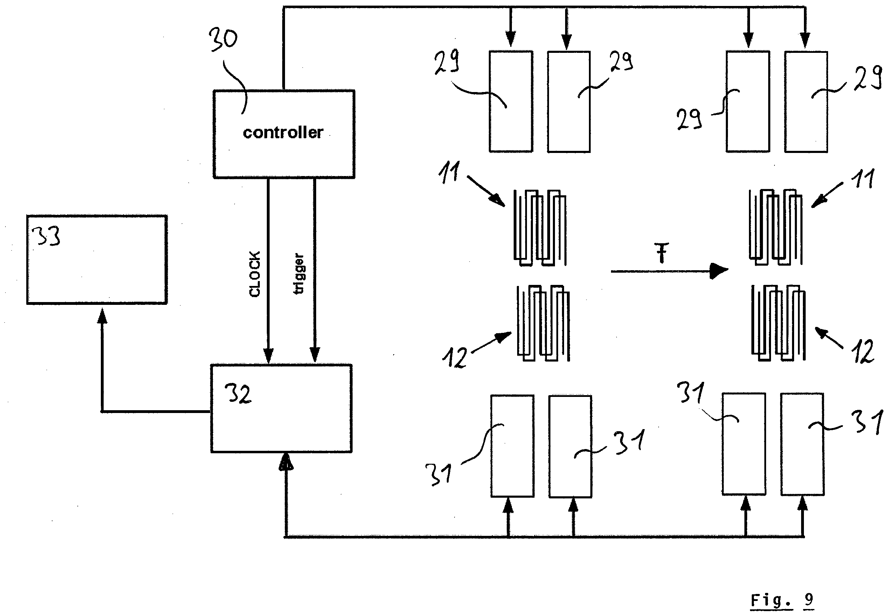

Derselbe Effekt kann auch über ein Setup erreicht werden, bei dem Paare von Sende- und Empfangswandlern in einem ersten Umfangsbereich des Rohres angeordnet sind und im Abstand hiervon ein weiteres Paar von Sende- und Empfangswandler beispielsweise flussabwärts angeordnet ist. Hier kann dann in beide Richtungen einmal mit dem Fluss und einmal gegen den Fluss in das bzw. in dem Rohr geschallt werden, so dass in der Differenzbetrachtung etwaige Fehlereinflüsse entfallen (Fig. 9).

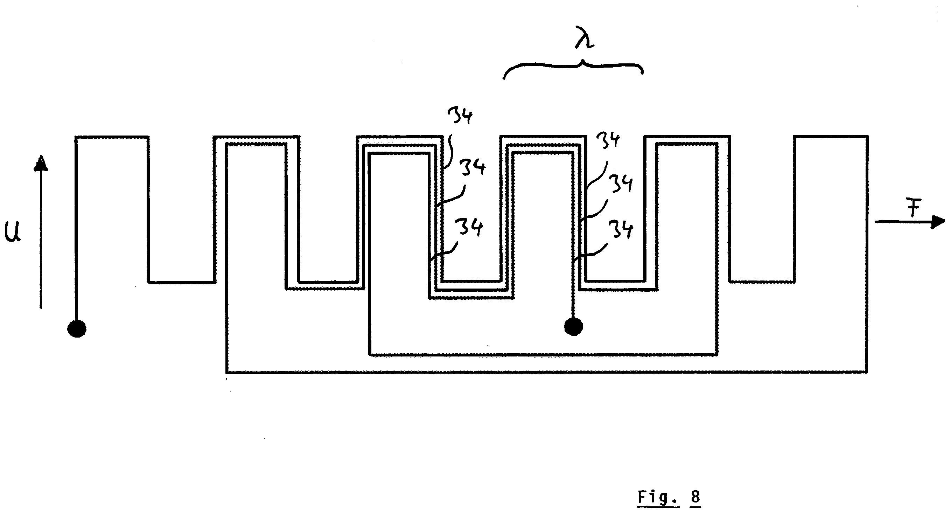

Ein Beispiel für eine weiterhin verbesserte Ausführungsform eines Sendewandlers findet sich in der Fig. 8. Dort ist (nicht maßstabsgetreu) eine Wicklung einer Leiterbahn der Spule gezeigt, die in ihrem mittleren Bereich Mehrfachwicklungen aufweist und hin zu den äußeren Enden nur noch eine Einfachwicklung aufweist. Teilstücke 34 der Leiterbahnen liegen im Mehrfachwicklungsbereich in der Mitte dicht beieinander, vorzugsweise aufeinander. Während in der Mitte der Spule ein sich in Summe ergebender Teil der Spule durch drei Leiterbahnabschnitte 34 gebildet wird, ist zu den Rändern hin nur eine Doppelwicklung und schließlich eine Einfachwicklung vorhanden. Durch diese Hochfrequenzinduktionsspulen werden ebenfalls bessere Messergebnisse erzielt. U kennzeichnet hierbei die Umfangsrichtung um den Umfang des Rohres quer zu seiner Längsrichtung bzw. Flussrichtung F.

In der Fig. 9 ist eine Prinzipskizze eines Durchflussmessers abgebildet, bei dem in Längsrichtung F voneinander beabstandet paarweise Sendeund Empfangswandler 11 und 12 angeordnet sind. So ist der in der Figur rechte Empfangswandler 12 zur Aufnahme des in der Fig. 9 linken Sendewandlers 11 ausgebildet, während der linke Empfangswandler 12 zur Aufnahme eines durch den in der Fig. 9 rechten Sendewandlers 11 erzeugten Signals ausgebildet ist. Erfindungsgemäß sind sowohl die beiden Sendewandler 11 als auch die beiden Empfangswandler 12 mit jeweils zwei in Richtung F verschobenen und somit quer zur Längsrichtung des Rohres versetzt angeordneten Leiterbahnen ausgebildet. Zur Erzeugung der notwendigen Stromstärken besitzt jeder Sendewandler eine jeweils einer Leiterbahn zugeordnete Sendeelektronik 29. Diese werden von einem Controller 30 gesteuert. Jeder Leiterbahn eines Empfangswandlers 12 wiederum ist ein Vorverstärker 31 zugeordnet, die die entsprechenden Signale der Leiterbahnen zu einer Datensammlung 32 weiterleiten. Diese ist zur genauen Auswertung über Clock- und Trigger-Verbindungen mit dem Controller 30 synchronisiert und leitet die Daten weiter zu der eigentlichen Rechnereinheit 33, in der die Datenauswertung, Ausgabe und Speicherung erfolgt.

## Patentansprüche

1. Verfahren zur Bestimmung des Flusses oder der Durchflussrate eines Mediums in einem von dem Medium durchströmten, elektrisch leitenden Objekt, insbesondere einem Rohr (1) oder einer Pipeline, wobei mit einem Sendewandler (11) wenigstens eine Ultraschallwelle (16) in dem Objekt erzeugt wird, die an einer Innenseite des Objekts als Longitudinalwelle (8) in das Medium einkoppelt und räumlich beabstandet von der Einkoppelstelle ein Ultraschallsignal, welches sich zumindest teilweise durch die Longitudinalwelle (8) ergibt, von einem Empfangswandler (12) aufgenommen und zur Auswertung des Flusses oder der Durchflussrate verwendet wird, wobei der Sendewandler (11), vorzugsweise unter Verzicht auf eine akustische Kopplung mit der Oberfläche des Objekts, ein erstes variierendes Magnetfeld in einem oberflächennahen Bereich des insbesondere metallischen Objekts erzeugt und durch Wechselwirkung dieses variierenden Magnetfelds mit einem statischen oder quasi-statischen Magnetfeld in diesem Bereich eine erste Ultraschallwelle erzeugt wird, **dadurch gekennzeichnet, dass** der Sendewandler (11) zusätzlich ein weiteres variierendes Magnetfeld in dem Bereich des Objekts erzeugt und durch Wechselwirkung des variierenden Magnetfelds mit dem statischen oder quasi-statischen Magnetfeld in diesem Bereich eine weitere, zweite Ultraschallwelle erzeugt wird, die sich mit der ersten Ultraschallwelle dergestalt überlagert, dass eine Amplitude einer resultierenden Welle in Richtung des Empfangswandlers (12) vergrößert und in Richtung weg von dem Empfangswandler (12) verringert ist, wobei vorzugsweise das erste und das zweite Magnetfeld durch zwei Hochfrequenzspulen (18,19) des Sendewandlers (11) erzeugt werden, und wobei Sende- und Empfangswandler (11,12) soweit voneinander beabstandet sind, dass sich das Ultraschallsignal im Empfangswandler (12) aus mehrfachen Durchgängen im Medium aufgrund von Reflexionen an der Innenseite des Objekts ergibt.

2. Verfahren nach Anspruch 1, **dadurch gekennzeichnet, dass** sich die erste und zweite Ultraschallwelle in Richtung weg von dem Empfangswandler (12) aufheben.

3. Verfahren nach Anspruch 1 oder 2, **dadurch gekennzeichnet, dass** die zweite Ultraschallwelle um 90° phasen- und um λ/4 örtlich verschoben zur ersten Ultraschallwelle in dem Objekt erzeugt wird, wobei λ der Wellenlänge der erzeugten Ultraschallwelle im Objekt entspricht.

4. Verfahren nach einem der vorherigen Ansprüche, **dadurch gekennzeichnet, dass** die variierenden Magnetfelder durch eine oder mehrere Leiterbahnen der Hochfrequenzinduktionsspulen (18,19) erzeugt werden, wobei sich die Leiterbahn(en) über wenigstens 90° entlang des Umfangs des rohrförmigen Objekts und angewinkelt zu dessen Längsachse erstrecken.

5. Verfahren nach Anspruch 4, **dadurch gekennzeichnet, dass** die erste und zweite Hochfrequenzinduktionsspule (18,19) durch zwei unterschiedliche Leiterbahnen des Sendewandlers (11) gebildet werden.

6. Verfahren nach einem der vorherigen Ansprüche, **dadurch gekennzeichnet, dass** der Sendewandler (11) auf die Erzeugung von Volumen-Wellen (Bulk Waves), insbesondere von Shear Bulk Wellen, oder auf die Erzeugung von geführten Wellen (guided Waves), insbesondere von Lamb-Wellen n-ter Ordnung mit n ganzzahlig und größer gleich 0, ausgelegt ist.

7. Verfahren nach einem der vorherigen Ansprüche, **dadurch gekennzeichnet, dass** die erste oder die zweite Ultraschallwelle durch wenigstens eine der Hochfrequenzinduktionsspulen erzeugt werden, deren Spulenwicklung in der Mitte der Spule vervielfacht ist.

8. Verfahren nach einem der vorherigen Ansprüche, **dadurch gekennzeichnet, dass** das Signal des Sendewandlers (11) über eine Fensterfunktion moduliert wird.

9. Verfahren nach einem der vorherigen Ansprüche, **dadurch gekennzeichnet, dass** ein Paar Sende- und Empfangswandler einerseits und ein weiteres Sende- und Empfangswandlerpaar andererseits am Objekt angeordnet werden und sowohl in Richtung des Flusses sowie in die Gegenrichtung gemessen wird, wobei die beiden Paare voneinander beabstandet am Objekt angeordnet sind.

10. Verfahren nach einem der vorherigen Ansprüche, **dadurch gekennzeichnet, dass** das Ultraschallsignal von zwei Hochfrequenzinduktionsspulen (20,21) des Empfangswandlers aufgenommen wird, deren Empfangssignale zur Analyse überlagert werden.

11. Vorrichtung umfassend ein von einem Medium durchströmtes elektrisch leitendes Objekt, insbesondere ein Rohr (1) oder eine Pipeline, und einen an dem elektrisch leitenden Objekt oder in dessen Nahfeld angeordneten akustischen Durchflussmesser zur nichtinvasiven Bestimmung des Flusses oder der Durchflussrate eines Mediums in dem von dem Medium durchströmten, elektrisch leitenden Objekt und zur Durchführung des Verfahrens nach einem der vorherigen Ansprüche, mit einem Sendewandler (11) zur Erzeugung wenigstens einer Ultraschallwelle (16) im Objekt, welche an einer zum Medium gerichteten Innenseite des Objekts als Longitudinalwelle (8) in das Medium einkoppelt, und mit einem Empfangswandler (12) zur Detektion eines Ultraschallsignals im Objekt, wobei sich das Ultraschallsignal zumindest teilweise durch die Longitudinalwelle (8) ergibt, wobei der Sendewandler (11), insbesondere unter Verzicht auf eine akustische Kopplung mit der Oberfläche des Objekts, zur Erzeugung zweier variierender Magnetfelder in einem oberflächennahen Bereich des insbesondere metallischen Objekts zwei Hochfrequenzspulen (11,12) aufweist, die quer zur Längsrichtung des Objekts zu betrachtend räumlich zueinander versetzt angeordnet sind, und durch Wechselwirkung ihrer variierenden Magnetfelder mit einem statischen oder quasi-statischen Magnetfeld in diesem Bereich zwei Ultraschallwellen erzeugen können, wobei sich die Ultraschallwellen dergestalt im Objekt überlagern können, dass eine Amplitude einer resultierenden Welle in Richtung des Empfangswandlers (12) vergrößert und in Richtung weg von dem Empfangswandler (12) verringert ist, wobei der Sendewandler hinsichtlich der Frequenz dergestalt ausgelegt ist und Sende- und Empfangswandler (11,12) soweit voneinander beabstandet sind, dass sich das Ultraschallsignal im Empfangswandler (12) aus mehrfachen Durchgängen im Medium aufgrund von Reflexionen an der Innenseite des Objekts ergibt.

12. Vorrichtung nach Anspruch 11, **dadurch gekennzeichnet, dass** der Empfangswandler (12) quer zur Längsrichtung des Objekts zu betrachtend die zwei Hochfrequenzspulen (20,21) ausbildet, die räumlich zueinander versetzt angeordnet sind.

13. Vorrichtung nach Anspruch 12, **dadurch gekennzeichnet, dass** der Sendeoder der Empfangswandler zur Ausbildung der zwei Hochfrequenzspulen zwei Leiterbahnen aufweist, wobei die durch Umlenkungen verbundenen Teilstücke (34) der ersten Leiterbahn jeweils von einem benachbarten Teilstück der zweiten Leiterbahn einen konstanten Abstand von λ/4 aufweisen, wobei λ/4 die Wellenlänge der Ultraschallwelle (16) im Objekt ist.

14. Vorrichtung nach Anspruch 13, **dadurch gekennzeichnet, dass** die gleiche Stromrichtung aufweisenden Teilstücke (34) einer der beiden Leiterbahnen einen Abstand von λ aufweisen, wobei λ die Wellenlänge der im Objekt induzierten Ultraschallwelle (16) ist.

15. Vorrichtung nach einem der vorherigen Ansprüche 13 oder 14, **dadurch gekennzeichnet, dass** die Leiterbahn des Sende- oder Empfangswandlers quer zur Längsrichtung des Objekts zu betrachtend in der Mitte Mehrfachwicklungen aufweist.

16. Vorrichtung nach einem der vorherigen Ansprüche 11 bis 15, **dadurch gekennzeichnet, dass** Sende- und Empfangswandler über denselben Zeitgeber miteinander verbunden sind.

17. Vorrichtung nach einem der vorherigen Ansprüche 11 bis 16, **dadurch gekennzeichnet, dass** die zumindest zwei Leiterbahnen des Sende - oder des Empfangswandlers gekrümmt und zum Anlegen an das Rohr (1) und/oder Umwickeln des Rohres (1) ausgebildet sind.

18. Vorrichtung nach Anspruch 17, **dadurch gekennzeichnet, dass** die Leiterbahnen dergestalt gekrümmt ausgebildet sind, dass sie sich im Wesentlichen über wenigstens 90° entlang des Umfangs des insbesondere rohrförmigen Objekts und angewinkelt zu dessen Längsachse erstrecken.

## Claims

1. Method for determining the flow or the flow rate of a medium in an electrically-conductive object through which the medium flows - in particular, a pipe (1) or a pipeline - wherein at least one ultrasonic wave (16) is generated in the object by means of a transmitting transducer (11), which ultrasonic wave is coupled into the medium as a longitudinal wave (8) at an inner side of the object and, spatially distanced from the coupling point, produces an ultrasonic signal, which is produced at least in part by the longitudinal wave (8), is picked up by a receiving transducer (12), and is used to evaluate the flow or the flow rate, wherein the transmitting transducer (11) - preferably dispensing with an acoustic coupling with the surface of the object - generates a first varying magnetic field in a region close to the surface of the - in particular, metallic - object, and a first ultrasonic wave is generated through interaction of this varying magnetic field with a static or quasi-static magnetic field in such region, **characterized in that** the transmitting transducer (11) additionally generates a further varying magnetic field in the region of the object and, through interaction of the varying magnetic field with the static or quasi-static magnetic field in this region, a further, second ultrasonic wave is generated, which is superimposed on the first ultrasonic wave in such a manner that an amplitude of a resulting wave is increased in the direction of the receiving transducer (12) and decreased in the direction away from the receiving transducer (12), wherein preferably the first and the second magnetic field are generated by two high-frequency coils (18, 19) of the transmitting transducer (11), and wherein transmitting and receiving transducers (11, 12) are spaced apart from one another to such an extent that the ultrasonic signal in the receiving transducer (12) results from multiple passes in the medium due to reflections at the inner side of the object.

2. Method according to claim 1, **characterized in that** the first and second ultrasonic waves cancel each other out in the direction away from the receiving transducer (12).

3. Method according to claim 1 or 2, **characterized in that** the second ultrasonic wave is generated 90° phase-shifted and λ/4 location-shifted with respect to the first ultrasonic wave in the object, where λ corresponds to the wavelength of the generated ultrasonic wave in the object.

4. Method according to one of the preceding claims, **characterized in that** the varying magnetic fields are generated by one or more conductive tracks of the high-frequency induction coils (18, 19), wherein the conductive track(s) extend(s) over at least 90° along the circumference of the tubular object and at an angle with respect to the longitudinal axis thereof.

5. Method according to claim 4, **characterized in that** the first and second high-frequency induction coils (18, 19) are formed by two different conductive tracks of the transmitting transducer (11).

6. Method according to one of the preceding claims, **characterized in that** the transmitting transducer (11) is designed for the generation of bulk waves - in particular, shear bulk waves - or for the generation of guided waves - in particular, nth-order Lamb waves, with n an integer and greater than or equal to 0.

7. Method according to one of the preceding claims, **characterized in that** the first or the second ultrasonic wave is generated by at least one of the high-frequency induction coils, the coil winding of which is multiplied in the center of the coil.

8. Method according to one of the preceding claims, **characterized in that** the signal of the transmitting transducer (11) is modulated by a window function.

9. Method according to one of the preceding claims, **characterized in that** a pair of transmitting and receiving transducers, on the one hand, and another pair of transmitting and receiving transducers, on the other, are arranged on the object and measured both in the direction of the flow and in the opposite direction, wherein the two pairs are arranged on the object at a distance from one another.

10. Method according to one of the preceding claims, **characterized in that** the ultrasonic signal is picked up by two high-frequency induction coils (20, 21) of the receiving transducer, the receive signals of which are superimposed for analysis.

11. Apparatus comprising an electrically-conductive object through which a medium flows - in particular, a pipe (1) or a pipeline - and an acoustic flowmeter arranged on the electrically-conductive object or in its near field for the non-invasive determination of the flow or the flow rate of a medium in the electrically-conductive object through which the medium flows, and for carrying out the method according to one of the previous claims, having a transmitting transducer (11) for generating at least one ultrasonic wave (16) in the object, which wave is coupled into the medium as a longitudinal wave (8) on an inner side, directed towards the medium, of the object and having a receiving transducer (12) for detecting an ultrasonic signal in the object, wherein the ultrasonic signal is produced at least partially by the longitudinal wave (8), wherein the transmitting transducer (11) has two high-frequency coils (11, 12) for generating two varying magnetic fields in a region close to the surface of the - in particular, metallic - object - in particular, while dispensing with an acoustic coupling with the surface of the object - which high-frequency coils (11, 12) are arranged spatially offset relative to one another, viewed transversely to the longitudinal direction of the object, and may generate two ultrasonic waves through interaction of their varying magnetic fields with a static or quasi-static magnetic field in such region, wherein the ultrasonic waves are able to be superimposed in the object in such a manner that an amplitude of a resulting wave is increased in the direction of the receiving transducer (12) and decreased in the direction away from the receiving transducer (12), wherein the transmitting transducer is designed with respect to the frequency in such a manner and transmitting and receiving transducers (11, 12) are spaced apart from one another to such an extent that the ultrasonic signal in the receiving transducer (12) results from multiple passes in the medium due to reflections on the inner side of the object.

12. Apparatus according to claim 11, **characterized in that** the receiving transducer (12), viewed transversely to the longitudinal direction of the object, forms the two high-frequency coils (20, 21) that are arranged spatially offset relative to one another.

13. Apparatus according to claim 12, **characterized in that** the transmitting or the receiving transducer has two conductive tracks for forming the two high-frequency coils, wherein the sections (34), connected by deflections, of the first conductive track are each at a constant distance of λ/4 from an adjacent section of the second conductive track, where λ/4 is the wavelength of the ultrasonic wave (16) in the object.

14. Apparatus according to claim 13, **characterized in that** the sections (34), having the same current direction, of one of the two conductive tracks are at a distance of λ, where λ is the wavelength of the ultrasonic wave (16) induced in the object.

15. Apparatus according to one of the preceding claims 13 or 14,
**characterized in that** the conductive track of the transmitting or receiving transducer has multiple windings in the center when viewed transversely to the longitudinal direction of the object.

16. Apparatus according to one of the preceding claims 11 through 15,
**characterized in that** transmitting and receiving transducers are connected to one another via the same timer.

17. Apparatus according to one of the preceding claims 11 through 16,
**characterized in that** the at least two conductive tracks of the transmitting or the receiving transducer are curved and designed to be applied to the pipe (1) and/or wrapped around the pipe (1).

18. Apparatus according to claim 17, **characterized in that** the conductive tracks are formed to be curved in such a manner that they extend substantially over at least 90° along the circumference of the in particular tubular object and at an angle to the longitudinal axis thereof.

## Revendications

1. Procédé permettant de déterminer l'écoulement ou le débit d'un milieu dans un objet électriquement conducteur, en particulier un tube (1) ou un pipeline, traversé par le milieu, dans lequel au moins une onde ultrasonore (16) est générée dans l'objet à l'aide d'un transducteur émetteur (11), laquelle onde ultrasonore est couplée au niveau d'une face interne de l'objet en tant qu'onde longitudinale (8) dans le milieu et un signal ultrasonore qui résulte au moins partiellement de l'onde longitudinale (8) est reçu, à une certaine distance du site de couplage dans l'espace, par un transducteur receveur (12) et utilisé pour l'évaluation de l'écoulement ou du débit, dans lequel le transducteur émetteur (11) génère, de préférence en renonçant à un couplage acoustique avec la surface de l'objet, un premier champ magnétique variable dans une zone proche de la surface de l'objet en particulier métallique et, par interaction dudit champ magnétique variable avec un champ magnétique statique ou quasi-statique dans ladite zone, une première onde ultrasonore est générée, **caractérisé en ce que** le transducteur émetteur (11) génère en outre un autre champ magnétique variable dans la zone de l'objet et, par interaction du champ magnétique variable avec le champ magnétique statique ou quasi-statique dans ladite zone, une autre, seconde onde ultrasonore qui se superpose à la première onde ultrasonore est générée de manière telle qu'une amplitude d'une onde résultante augmente dans le sens du transducteur receveur (12) et diminue dans le sens à l'opposé du transducteur receveur (12), dans lequel le premier et le second champ magnétique sont de préférence générés par deux bobines haute fréquence (18,19) du transducteur émetteur (11), et dans lequel le transducteur émetteur et le transducteur receveur (11,12) sont espacés l'un de l'autre de manière telle que le signal ultrasonore dans le transducteur receveur (12) résulte de plusieurs passages dans le milieu sur la base de réflexions sur la face interne de l'objet.

2. Procédé selon la revendication 1, **caractérisé en ce que** la première et la seconde onde ultrasonore s'annulent dans le sens à l'opposé du transducteur receveur (12).

3. Procédé selon la revendication 1 ou 2, **caractérisé en ce que** la seconde onde ultrasonore est générée de manière décalée en phase de 90° et localement de λ/4 par rapport à la première onde ultrasonore dans l'objet, dans lequel λ correspond à la longueur d'onde de l'onde ultrasonore générée dans l'objet.

4. Procédé selon l'une quelconque des revendications précédentes,
**caractérisé en ce que** les champs magnétiques variables sont générés par une ou plusieurs pistes conductrices des bobines d'induction haute fréquence (18,19), dans lequel la ou les pistes conductrices s'étendent sur au moins 90° le long de la périphérie de l'objet tubulaire et de manière inclinée par rapport à son axe longitudinal.

5. Procédé selon la revendication 4, **caractérisé en ce que** la première et la seconde bobine d'induction haute fréquence (18,19) sont formées par deux pistes conductrices différentes du transducteur émetteur (11).

6. Procédé selon l'une quelconque des revendications précédentes,
**caractérisé en ce que** le transducteur émetteur (11) est configuré pour la génération d'ondes de volume (bulk waves), en particulier d'ondes de volume de cisaillement (shear bulk waves), ou pour la génération d'ondes guidées (guided waves), en particulier d'ondes de Lamb d'ordre n avec n représentant un nombre entier et étant supérieur ou égal à 0.

7. Procédé selon l'une quelconque des revendications précédentes,
**caractérisé en ce que** la première ou la seconde onde ultrasonore est générée par au moins l'une des bobines d'induction haute fréquence dont l'enroulement de bobine est multiplié au centre de la bobine.

8. Procédé selon l'une quelconque des revendications précédentes,
**caractérisé en ce que** le signal du transducteur émetteur (11) est modulé par l'intermédiaire d'une fonction de fenêtre.

9. Procédé selon l'une quelconque des revendications précédentes,
**caractérisé en ce qu'**une paire de transducteurs émetteur et récepteur d'une part et une autre paire de transducteurs émetteur et receveur d'autre part sont disposées au niveau de l'objet et la mesure s'effectue à la fois dans le sens de l'écoulement et dans le sens inverse, dans lequel les deux paires sont disposées à une certaine distance l'une de l'autre au niveau de l'objet.

10. Procédé selon l'une quelconque des revendications précédentes,
**caractérisé en ce que** le signal ultrasonore est reçu par deux bobines d'induction haute fréquence (20,21) du transducteur receveur dont les signaux de réception sont superposés pour l'analyse.

11. Dispositif comprenant un objet électriquement conducteur traversé par un milieu, en particulier un tube (1) ou un pipeline, et un débitmètre acoustique disposé au niveau de l'objet électriquement conducteur ou dans son champ proche et destiné à déterminer de manière non invasive l'écoulement ou le débit d'un milieu dans l'objet électriquement conducteur traversé par le milieu et à mettre en oeuvre le procédé selon l'une des revendications précédentes, comportant un transducteur émetteur (11) pour la génération d'au moins une onde ultrasonore (16) dans l'objet, laquelle est couplée à une face interne orientée vers le milieu de l'objet en tant qu'onde longitudinale (8) dans le milieu, et comportant un transducteur receveur (12) pour la détection d'un signal ultrasonore dans l'objet, dans lequel le signal ultrasonore résulte au moins partiellement de l'onde longitudinale (8), dans lequel le transducteur émetteur (11) présente deux bobines haute fréquence (11,12), pour la génération, en particulier en renonçant à un couplage acoustique avec la surface de l'objet, de deux champs magnétiques variables dans une zone proche de la surface de l'objet en particulier métallique, lesquelles bobines haute fréquence sont disposées, vues transversalement par rapport à la direction longitudinale de l'objet, de manière décalée l'une par rapport à l'autre dans l'espace et peuvent générer, par interaction de leur champ magnétique variable avec un champ magnétique statique ou quasi-statique dans ladite zone, deux ondes ultrasonores, dans lequel les ondes ultrasonores peuvent se superposer dans l'objet de manière telle qu'une amplitude d'une onde résultante augmente dans le sens du transducteur receveur (12) et diminue dans le sens à l'opposé du transducteur receveur (12), dans lequel le transducteur émetteur est configuré en ce qui concerne la fréquence de manière telle et les transducteurs émetteur et receveur (11,12) sont espacés l'un de l'autre de manière telle que le signal ultrasonore résulte dans le transducteur receveur (12) de plusieurs passages dans le milieu sur la base de réflexions sur la face interne de l'objet.

12. Dispositif selon la revendication 11, **caractérisé en ce que** le transducteur receveur (12) forme, vu transversalement par rapport à la direction longitudinale de l'objet, les deux bobines haute fréquence (20,21) qui sont disposées de manière décalée l'une par rapport à l'autre dans l'espace.

13. Dispositif selon la revendication 12, **caractérisé en ce que** le transducteur émetteur ou le transducteur receveur présente, pour la formation des deux bobines haute fréquence, deux pistes conductrices, dans lequel les parties (34) reliées par des déviations de la première piste conductrice présentent respectivement une distance constante de λ/4 par rapport à une partie adjacente de la seconde piste conductrice, dans lequel λ/4 représente la longueur d'onde de l'onde ultrasonore (16) dans l'objet.

14. Dispositif selon la revendication 13, **caractérisé en ce que** des parties (34) présentant le même sens du courant d'une des deux pistes conductrices présentent une distance de λ, dans lequel λ représente la longueur d'onde de l'onde ultrasonore (16) induite dans l'objet.

15. Dispositif selon l'une des revendications précédentes 13 ou 14, **caractérisé en ce que** la piste conductrice du transducteur émetteur ou du transducteur receveur présente, vue transversalement par rapport à la direction longitudinale de l'objet, des enroulements multiples au centre.

16. Dispositif selon l'une des revendications précédentes 11 à 15, **caractérisé en ce que** le transducteur émetteur et le transducteur receveur sont reliés l'un à l'autre par l'intermédiaire du même temporisateur.

17. Dispositif selon l'une des revendications précédentes 11 à 16, **caractérisé en ce que** les au moins deux pistes conductrices du transducteur émetteur ou du transducteur receveur sont incurvées et conçues pour s'appliquer contre le tube (1) et/ou enrouler le tube (1).

18. Dispositif selon la revendication 17, **caractérisé en ce que** les pistes conductrices sont conçues de manière incurvée de manière telle qu'elles s'étendent sensiblement sur au moins 90° le long de la périphérie de l'objet en particulier tubulaire et de manière inclinée par rapport à son axe longitudinal.
